# EUROPEAN PATENT SPECIFICATION

(11) **EP 4 030 158 B1**
(45) Date of publication and mention of the grant of the patent: **30.04.2025**
(21) Application number: 20862902.2
(22) Date of filing: 13.08.2020
(51) Int. Cl.: G01L 9/04, G01L 15/00, G01L 9/00

(54) **PRESSURE SENSOR**
DRUCKSENSOR
CAPTEUR DE PRESSION

(30) Priority: 09.09.2019 JP 2019164001
(43) Date of publication of application: 20.07.2022
(73) Proprietor: TDK Corporation, Tokyo 103-6128 (JP)
(72) Inventor: SASAHARA, Tetsuya, Tokyo 103-6128 (JP); UNNO, Ken, Tokyo 103-6128 (JP); KOBAYASHI, Masanori, Tokyo 103-6128 (JP); NAWAOKA, Kohei, Tokyo 103-6128 (JP)
(74) Representative: Epping - Hermann - Fischer
(86) International application number: PCT/JP2020/030782
(87) International publication number: WO 2021/049245

(56) References cited:
- JP-A- 2001 272 293
- JP-A- H10 506 718
- JP-A- S58 120 142
- US-A- 5 551 304

## Description

### Technical Field

The present invention relates to a pressure sensor that detects a strain due to deformation of a membrane by resistance change.

### Background

There is a known pressure sensor utilizing the piezoresistive effect to detect a strain of a membrane (also referred to as a diaphragm) by resistance change. In such a pressure sensor, a strain due to a deformation of the membrane is detected by a resistance change of a resistor disposed on the membrane.

In recent years, it has been required to reduce the power consumption of the pressure sensor. For example, a technique of intermittently supplying power to the bridge circuit included in the pressure sensor by pulse driving is proposed (see Patent Document 1). Further pressure sensors are known from Patent Documents 2 to 5.

However, the pressure sensor that intermittently supplies power has a problem that it cannot detect a momentary pressure abnormality that occurs when the power supply is turned off.

### Prior Art

### Patent Documents

Patent Document 1: JP H06-194243 A
Patent Document 2: JP H10-506718 A
Patent Document 3: JP S58-120142 A
Patent Document 4: JP 2001-272293 A
Patent Document 5: US 5,551,304 A

### Summary of Invention

### Problems to be solved by Invention

The present invention provides a pressure sensor capable of reducing power consumption and preventing omission of detection of pressure change.

### Means for solving the Problem

To solve the above object, a pressure sensor according to the present invention comprises:
a membrane configured to produce deformation corresponding to pressure;
a first circuit including a first resistor and a third resistor arranged at a first strain position where a predetermined strain characteristic occurs on the membrane and a second resistor and a fourth resistor arranged at a second strain position where a strain characteristic in a different direction from the first strain position occurs and configured to form a bridge circuit and detect strain; and
a second circuit including a fifth resistor disposed at a position where a strain characteristic in the same direction as the first strain position or the second strain position in the membrane occurs and capable of detecting strain independently from the first circuit.

Since the pressure sensor according to the present invention includes a second circuit capable of detecting strain independently from a bridge circuit configured to detect pressure change, the second circuit can detect strain generated in the membrane even if no electric power is supplied to the first circuit. Since the fifth circuit included in the second circuit is disposed at the first strain position or the second strain position where the first to fourth resistors of the first circuit are arranged or a position where a strain characteristic in the same direction as them occurs in the membrane, the pressure sensor can precisely detect the generation of pressure change to be detected. Thus, the pressure sensor according to the present invention can reduce electric power supply to the first circuit and achieve low electric power consumption while preventing the detection omission of pressure change by the second circuit.

The pressure sensor according to the present invention comprises a switching unit for switching electric power supply to the first circuit using a detection signal from the second circuit.

Such a pressure sensor can achieve low electric power consumption by stopping electric power supply to the first circuit while the second circuit is not detecting signal. For example, the detection omission of pressure change can be prevented by restarting electric power supply to the first circuit triggered by the detection of signal by the second circuit.

For example, the fifth resistor may be at least partly disposed at the first strain position located on the outer peripheral side of the second strain position on the membrane.

Since the first strain position is located on the outer peripheral side of the second strain position, the space for being able to dispose the fifth resistor at the first strain position is larger than that at the second strain position. Thus, such a pressure sensor can use the fifth resistor having a comparatively large size and a high resistance value for the second circuit and can effectively reduce electric power consumption in the second circuit.

For example, the fifth resistor may include a plurality of thin film resistors made of thin films, and the second circuit may include a connection portion for connecting the thin film resistors in series.

When the second circuit includes the fifth resistor made of a plurality of thin film resistors and a connection portion for connecting the thin film resistors in series, it is possible to increase the resistance value of the fifth resistor and effectively reduce the electric power consumption in the second circuit. The pressure sensor using the thin film resistors can be manufactured by effectively forming a plurality of thin film resistors having different resistance values on the membrane and is productive.

For example, the fifth resistor may include a first thin film resistor made of a thin film disposed at the first strain position located on the outer peripheral side of the second strain position on the membrane and a second thin film resistor made of a thin film disposed in a third strain region where a strain having a different size from the first strain position but in the same direction occurs on the membrane, and the second circuit may include a connection portion for connecting the first thin film resistor and the second thin film resistor in series.

In such a pressure sensor, the fifth resistor is disposed using not only the first strain position but also a third strain position where a strain having a different size from the first strain position but in the same direction occurs, and it is thereby possible to increase the resistance value of the fifth resistor and more effectively reduce the electric power consumption in the second circuit.

A resistance value of the fifth resistor may be higher than that of any of the first to fourth resistors in a state where the membrane is not deformed.

When such a fifth resistor is included, the electric power consumption in the second circuit can be reduced effectively.

### Brief Description of the Drawings

FIG. 1 is a schematic cross-sectional view of a pressure sensor according to First Embodiment of the present invention;
FIG. 2 is a conceptual diagram illustrating an arrangement of resistors and an electrode portion in the pressure sensor according to First Embodiment;
FIG. 3 is a conceptual diagram illustrating an example of a circuit formed by using the pressure sensor according to First Embodiment;
FIG. 4 is a conceptual diagram illustrating a relation between a signal output from the pressure sensor according to First Embodiment and strain or pressure;
FIG. 5 is a conceptual diagram illustrating an example of a circuit formed by using a pressure sensor according to Second Embodiment;
FIG. 6 is a conceptual diagram illustrating a relation between a signal output from the pressure sensor according to Second Embodiment and strain or pressure;
FIG. 7 is a conceptual diagram illustrating an arrangement of resistors and an electrode portion in a pressure sensor according to Third Embodiment and an example of a circuit formed by the pressure sensor;
FIG. 8 is a conceptual diagram illustrating an arrangement of resistors and an electrode portion in a pressure sensor according to Fourth Embodiment and an example of a circuit formed by the pressure sensor;
FIG. 9 is a conceptual diagram illustrating an arrangement of resistors and an electrode portion in a pressure sensor according to Fifth Embodiment and an example of a circuit formed by the pressure sensor;
FIG. 10 is a schematic cross-sectional view of a pressure sensor according to Sixth Embodiment of the present invention; and
FIG. 11 is a conceptual diagram illustrating a circuit formed by using a pressure sensor according to Examples of the present invention.

### Detailed Description of Invention

Hereinafter, the present invention is described based on the embodiments shown in the figures.

### First Embodiment

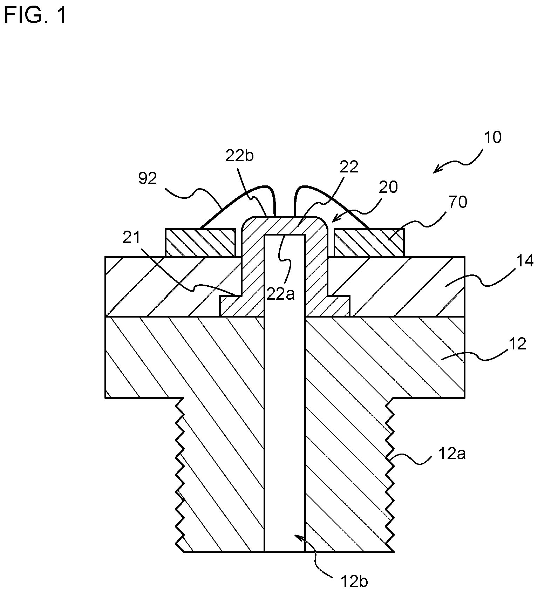

FIG. 1 is a schematic cross-sectional view of a pressure sensor 10 according to the present invention. The pressure sensor 10 includes a membrane 22 configured to produce deformation corresponding to pressure. In the embodiment shown in FIG. 1, an upper bottom of a stem 20 is the membrane 22. In addition to the stem 20 including the membrane 22, the pressure sensor 10 includes a connection member 12 provided with a passage 12b for transmitting pressure to the stem 20, a holding member 14 for fixing the stem 20 to the connection member 12, and a substrate portion 70 wired to an electrode portion on the membrane 22, and the like.

As shown in FIG. 1, a screw groove 12a for fixing the pressure sensor 10 to a measurement target is formed on the outer periphery of the connection member 12. Since the pressure sensor 10 is fixed by the screw groove 12a, the passage 12b formed inside the connection member 12 airtightly communicates with a pressure chamber as the measurement target.

As shown in FIG. 1, the stem 20 has a bottomed (upper bottom) tubular outer shape and is disposed at one end of the passage 12b of the connection member 12. The stem 20 is provided with a flange portion 21 on the opening side and is fixed to the connection member 12 by sandwiching the flange portion 21 between the holding member 14 and the connection member 12. The opening of the stem 20 and the passage 12b of the connection member 12 are airtightly connected using the holding member 14, and the pressure to be measured is transmitted to the membrane 22 of the stem 20.

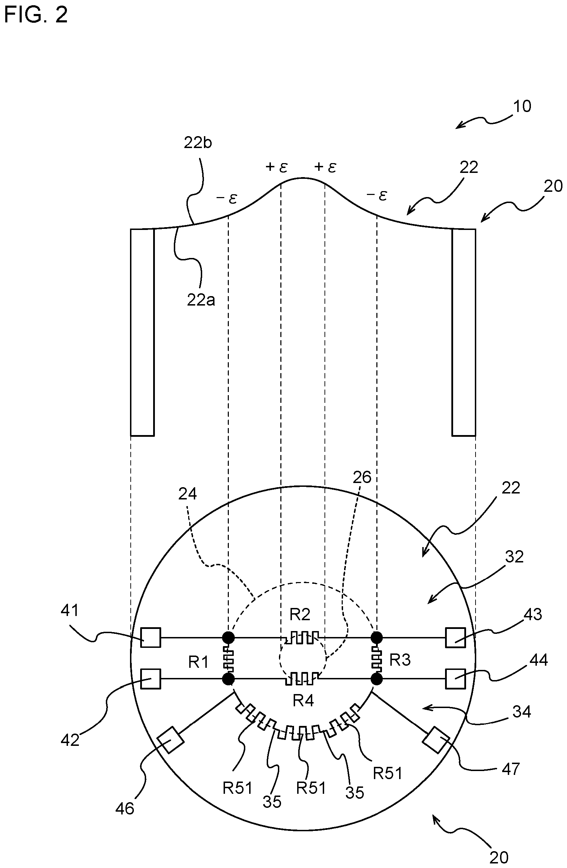

The membrane 22, which is the upper bottom of the stem 20, is thinner than other parts of the stem 20, such as the side wall, and is deformed corresponding to the pressure transmitted from the passage 12b. The membrane 22 includes an inner surface 22a configured to contact with a pressure fluid and an outer surface 22b opposite to the inner surface 22a. A first circuit 32 and a second circuit 34 mentioned below (see FIG. 2), the electrode portion, and the like are provided on the outer surface 22b side of the membrane 22.

The substrate portion 70 having a wiring, an electrode portion, and the like electrically connected to the first circuit 32 and the second circuit 34 formed on the outer surface 22b of the membrane 22 is fixed to the holding member 14. The electrode portion of the substrate portion 70 and the electrode portion on the membrane 22 are electrically connected via a connection wiring 92 or the like formed by wire bonding or the like. The substrate portion 70 has a ring outer shape. The stem 20 is inserted in a through hole formed at the center of the substrate portion 70.

FIG. 2 is a conceptual diagram illustrating an arrangement of resistors and the electrode portions in the pressure sensor 10 according to First Embodiment. The upper part of FIG. 2 is a schematic cross-sectional view of the stem 20, and the lower part of FIG. 2 is a schematic plan view of the stem 20 viewed from the upper side, which is the outer surface 22b side of the membrane 22.

As shown in FIG. 2, the pressure sensor 10 includes the first circuit 32 configured to form a bridge circuit and detect strain and the second circuit 34 capable of detecting strain independently from the first circuit 32. The first circuit 32 and the second circuit 34 are formed on the outer surface 22b of the membrane 22.

As shown in the schematic plan view of the lower part of FIG. 2, the first circuit 32 includes a first resistor R1, a second resistor R2, a third resistor R3, and a fourth resistor R4. The resistors R1-R4 are separately arranged on a first circumference 24, which is a first strain position that produces a predetermined strain characteristic responding to the pressure applied to the inner surface 22a of the membrane 22, and a second circumference 26, which is a second strain position that produces a strain characteristic in a direction different from that at the first strain position.

As shown in FIG. 2, the first circumference 24 is a circumference of a circle having a radius larger than that of the second circumference 26 and is located on the outer peripheral side of the second circumference 26 in the membrane 22. For example, when the membrane 22 receives a predetermined positive pressure from the inner surface 22a, a negative strain - ε (compressive strain) is generated on the first circumference 24, but a positive strain + ε (tensile strain) is generated on the second circumference 26. Preferably, the strain characteristic on the first circumference 24 (the first strain position) and the strain characteristic on the second circumference 26 (the second strain position) are in mutually different directions (relation in which the symbols are different and cancel each other out).

Among the first to fourth resistors R1-R4 included in the first circuit 32, the first resistor R1 and the third resistor R3 are arranged on the first circumference 24. On the other hand, among the first to fourth resistors R1-R4 included in the first circuit 32, the second resistor R2 and the fourth resistor R4 are arranged on the second circumference 26.

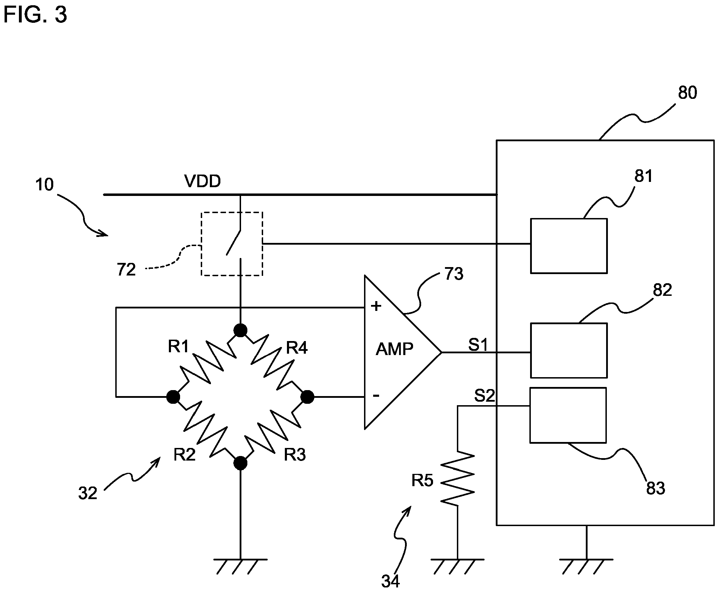

FIG. 3 is a conceptual diagram illustrating an example of a circuit formed by using the pressure sensor 10. As shown in FIG. 3, the first to fourth resistors R1-R4 included in the first circuit 32 form a bridge circuit. An output signal S1 of the first circuit 32 is input to a pressure signal input unit 82 of a microprocessor 80 via an amplifier 73. As shown in FIG. 2, first electrode portions 41-44 for supplying electric power to the first circuit 32 or transmitting the output signal S1 of the first circuit 32 are formed on the membrane 22. The first circuit 32 is electrically connected to the substrate portion 70 via the first electrode portions 41-44 and a connection wiring 92 (see FIG. 1).

As shown in the schematic plan view of the lower part of FIG. 2, the second circuit 34 includes a fifth resistor R5 disposed on the first circumference 24, which is the first strain position. The fifth resistor R5 of the second circuit 34 may be disposed on the second circumference 26, but is preferably disposed on the first circumference 24 located on the outer peripheral side of the second circumference 26 from the viewpoint of increasing the resistance value of the fifth resistor R5. This is because the space for being able to dispose the fifth resistor R5 is larger on the first circumference 24. In particular, when the fifth resistor R5 is a thin film resistor made of a thin film (described below), the resistance value of the fifth resistor R5 can be larger as the disposition space is larger. The fifth resistor R5 partly or entirely produces a strain characteristic in the same direction as the first circumference 24, but may be disposed at a position where a strain having a size different from that of the first circumference 24 occurs.

As shown in FIG. 2, the fifth resistor R5 includes a plurality of first thin film resistors R51 made of thin films arranged on the first circumference 24. The second circuit 34 includes connection portions 35 for connecting the first thin film resistors R51 to each other, and the first thin film resistors R51 are connected in series by the connection portions 35 to form the fifth resistor R5.

The second circuit 34 is not connected to the first circuit 32 at least on the membrane 22 and can detect strain independently from the first circuit 32. As shown in FIG. 2, second electrode portions 46 and 47 for supplying electric power to the second circuit 34 and transmitting a detection signal S2 of the second circuit 34 are formed on the membrane 22.

As shown in FIG. 3, the detection signal S2 from the second circuit 34 including the fifth resistor R5 is input to a detection signal input unit 83 of the microprocessor 80. As shown in FIG. 3, the pressure sensor 10 includes a switching unit 72 for switching electric power supply to the first circuit 32. The microprocessor 80, the switching unit 72, and the amplifier 73 shown in FIG. 3 can be arranged, for example, on the substrate portion 70, but their arrangement locations are not particularly limited.

The switching unit 72 includes a switch disposed on the substrate portion 70 (see FIG. 1). When the switch is turned on, electric power is supplied to the first circuit 32. When the switch is turned off, electric power supply to the first circuit 32 is stopped. ON/OFF of the switching unit 72 is controlled by a switch control unit 81 of the microprocessor 80.

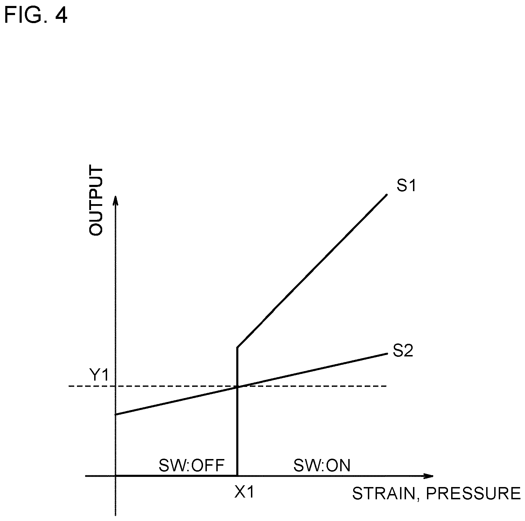

The switch control unit 81 controls the switching unit 72 by using the detection signal S2 from the second circuit 34. FIG. 4 is a graph illustrating an example of output results of the detection signal S2 and the output signal S1 in the pressure sensor 10 including the circuit shown in FIG. 3. The horizontal axis of the graph shown in FIG. 4 represents the strain generated in the fifth resistor R5 or the pressure applied to the membrane 22. The graph shown in FIG. 4 assumes a case where a positive strain occurs in the fifth resistor R5, but even in a case where a negative strain occurs in the fifth resistor R5 as shown in FIG. 2, it can be considered in the same way, for example, if the strain is an absolute value.

As shown in the left region of FIG. 4, when the pressure of the pressure fluid to be measured of the pressure sensor 10 is low and the strain generated in the fifth resistor R5 is smaller than a predetermined value X1, an output value of the detection signal S2 detected in the second circuit 34 is smaller than a predetermined value Y1. The switch control unit 81 shown in FIG. 3 recognizes that the detection signal S2 is smaller than the predetermined value Y1 via the detection signal input unit 83 and maintains the switch of the switching unit 72 in the OFF state.

When the switch of the switching unit 72 shown in FIG. 3 is in the OFF state, electric power is not supplied to the first circuit 32. Thus, as shown in FIG. 4, the first circuit 32 does not detect distortion, and the value of the output signal S1 from the first circuit 32 does not change. The predetermined value X1 for switching ON/OFF of electric power supply is determined as an upper limit of a range in which pressure detection by the pressure sensor 10 is unnecessary or as a value smaller than the upper limit.

As shown in the right region of FIG. 4, when the pressure of the pressure fluid to be measured of the pressure sensor 10 is high and the strain generated in the fifth resistor R5 is a predetermined value X1 or more, an output value of a detection signal S2 detected in the second circuit 34 is a predetermined value Y1 or more. The switch control unit 81 shown in FIG. 3 recognizes that the detection signal S2 is the predetermined value Y1 or more via the detection signal input unit 83 and maintains the switch of the switching unit 72 in the ON state.

When the switch of the switching unit 72 shown in FIG. 3 is the ON state, electric power is supplied to the first circuit 32. Thus, as shown in FIG. 4, the first circuit 32 detects distortions of the first to fourth resistors R1-R4 caused by pressure, and the value of the output signal S1 from the first circuit 32 changes depending on the distortions and pressure. In the pressure sensor 10, when the strain generated in the fifth resistor R5 is smaller than the predetermined value X1, electric power is not supplied to the first circuit 32 forming the bridge circuit. Thus, the pressure sensor 10 can achieve low power consumption. Moreover, since the pressure sensor 10 constantly detects the pressure to be measured by using the second circuit 34, the electric power supply can be switched appropriately by the switching unit 72 even when a momentary pressure rise occurs, and it is possible to prevent omission of detection of pressure change.

The pressure detection accuracy of the second circuit 34 is sufficient as long as the electric power supply by the switching unit 72 can be switched appropriately and may be lower than the pressure detection accuracy of the first circuit 32 forming the bridge circuit. From the viewpoint of lowering the electric current value flowing through the second circuit 34 to reduce the electric power consumption in the second circuit 34, the resistance value of the fifth resistor R5 in the second circuit 34 is preferably higher than any of the resistance values of the first to fourth resistors R1-R4 included in the first circuit 32 in the state where no strain is generated.

The stem 20 including the membrane 22 as shown in FIG. 2 and the first circuit 32 and the second circuit 34 provided on the membrane 22 are manufactured, for example, as below. First, the stem 20 including the membrane 22 is manufactured by machining. The material of the stem 20 is not particularly limited as long as it produces an appropriate elastic deformation and is, for example, a metal or an alloy such as stainless steel.

Next, the first circuit 32 including the first to fourth resistors R1-R4, the second circuit 34 including the fifth resistor R5, the first electrode portions 41-44, and the second electrode portions 46 and 47 as shown in FIG. 2 are formed by forming a semiconductor thin film or a metal thin film on the membrane 22 with an insulating film interposed therebetween and subjecting this thin film to laser processing, microfabrication by a semiconductor processing technique such as screen printing, or the like. If necessary, an insulating surface layer may be formed on parts other than the first and second electrode portions 41-44, 46, and 47, such as the upper surface of the first circuit 32 or the second circuit 34.

### Second Embodiment

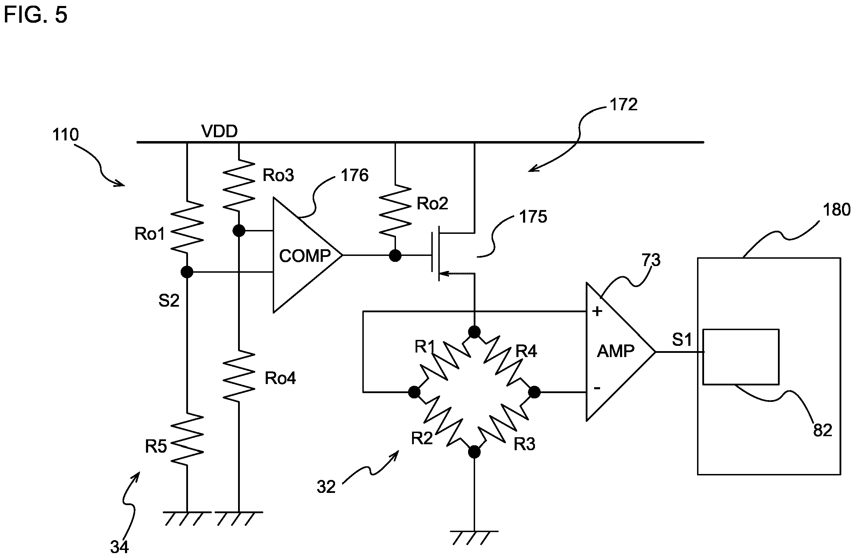

FIG. 5 is a conceptual diagram illustrating an example of a circuit formed by using a pressure sensor 110 according to Second Embodiment. Except for a switching unit 172 and a microprocessor 180 arranged on the substrate portion 70, the pressure sensor 110 according to Second Embodiment is similar to the pressure sensor 10 according to First Embodiment. The pressure sensor 110 according to Second Embodiment is explained for only differences from the pressure sensor 10 according to First Embodiment, and common maters are not explained.

The pressure sensor 110 is similar to the pressure sensor 10 shown in FIG. 2 in terms of the first circuit 32 and the second circuit 34 formed on the membrane 22. However, the switching unit 72 of the pressure sensor 10 according to First Embodiment is controlled by the switch control unit 81 of the microprocessor 80, but the switching unit 172 of the pressure sensor 110 is different from this. That is, the switching unit 172 of the pressure sensor 110 is achieved by a circuit of resistors Ro1, Ro2, Ro3, and Ro4, a comparator 176, and a transistor 175 shown in FIG. 5.

In the switching unit 172 shown in FIG. 5, the transistor 175 is disposed at the entrance from a power supply voltage VDD to the first circuit 32, and the electric power supply to the first circuit 32 is switched by the transistor 175. A detection signal S2 binarized by the comparator 176 is input to a third terminal of the transistor 175. As a result, ON/OFF of electric power supply to the first circuit 32 is switched by using the detection signal S2 from the second circuit 34.

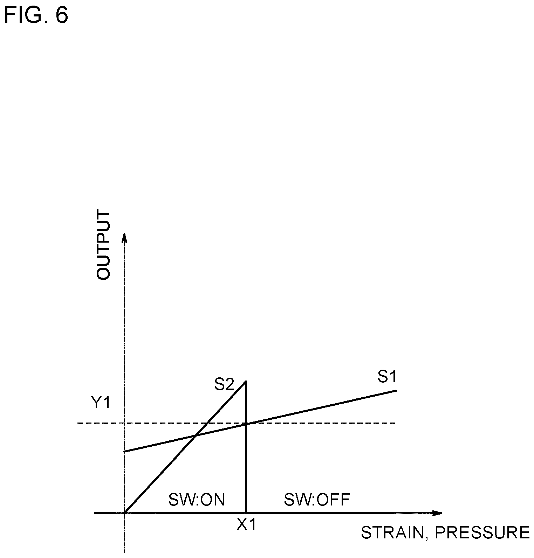

As with the pressure sensor 10 shown in FIG. 3, the pressure sensor 110 shown in FIG. 5 can also switch electric power supply so as to supply electric power to the first circuit 32 only when the pressure is equal to or higher than a predetermined pressure as shown in FIG. 4. As shown in FIG. 6, the pressure sensor 110 can switch electric power supply so as to supply electric power to the first circuit 32 only when the pressure is lower than a predetermined pressure by replacing the inputs to the comparator 176.

FIG. 6 is a graph showing an example of output results of the detection signal S2 and the output signal S1 in the pressure sensor 110 including the circuit shown in FIG. 5. The horizontal axis of the graph shown in FIG. 6 represents the strain generated in the fifth resistor R5 or the pressure applied to the membrane 22. As with FIG. 4, the graph shown in FIG. 6 assumes that a positive distortion is generated in the fifth resistor R5.

As shown in the left region of FIG. 6, when the pressure of the pressure fluid to be measured by the pressure sensor 10 is low and the strain generated in the fifth resistor R5 is smaller than a predetermined value X1, an output value of the detection signal S2 detected in the second circuit 34 is smaller than a predetermined value Y1. The detection signal S2 converted to Hi via the comparator 176 is input to the third terminal of the transistor 175 shown in FIG. 5, and the transistor 175 makes it possible to supply electric power to the first circuit 32 by the power supply voltage VDD.

In this state, as shown in the left region of FIG. 6, the first circuit 32 detects strains of the first to fourth resistors R1-R4 caused by pressure, and the value of the output signal S1 from the first circuit 32 changes responding to the pressure of the fluid.

As shown in the right region of FIG. 6, when the pressure of the pressure fluid to be measured by the pressure sensor 10 is high and the strain generated in the fifth resistor R5 is a predetermined value X1 or more, the output value of the detection signal S2 detected in the second circuit 34 is a predetermined value Y1 or more. A detection signal S2 converted to Low via the comparator 176 is input to the third terminal of the transistor 175 shown in FIG. 5, and the transistor 175 makes it impossible to supply electric power to the first circuit 32 by the power supply voltage VDD.

In this state, electric power is not supplied to the first circuit 32. Thus, as shown in the right region of FIG. 6, the first circuit 32 does not detect strain, and the value of the output signal S1 from the first circuit 32 does not change. The predetermined value X1 for switching ON/OFF of electric power supply is determined as an upper limit of a range in which pressure detection by the pressure sensor 10 is required or as a value larger than the upper limit.

In the pressure sensor 110 according to Second Embodiment, the second circuit 134 is driven using the power supply voltage VDD common to the first circuit 32, and it is thereby unnecessary to separately generate a voltage applied to the fifth resistor R5 of the second circuit 134. Since the pressure sensor 110 achieves the switching unit 172 with a simple circuit, the operation reliability of the switching unit 172 is high, and the calculation amount of the microprocessor 180 for processing the output signal S1 can be reduced.

### Third Embodiment

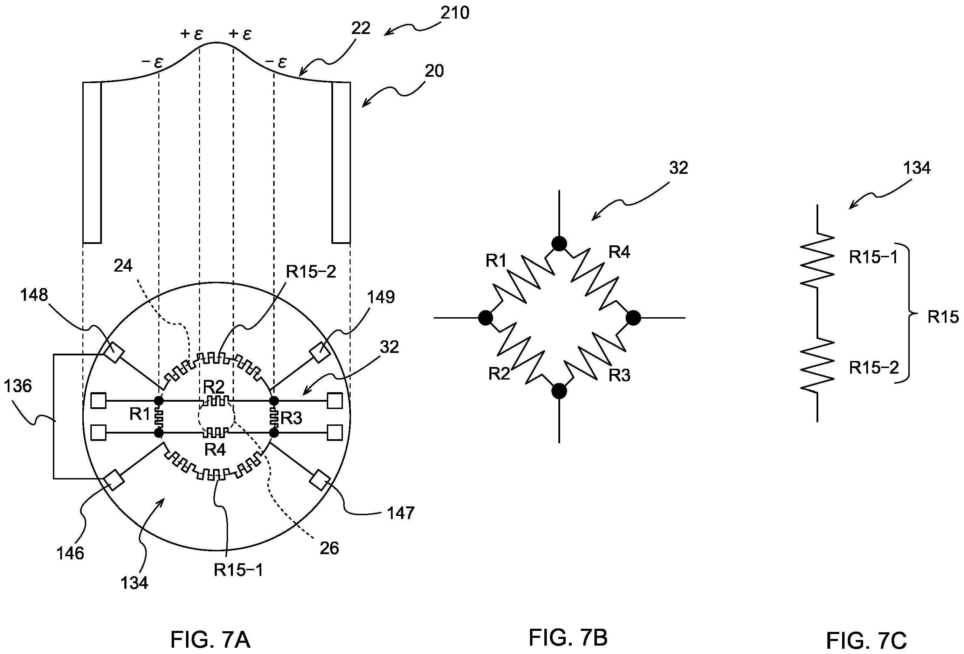

FIG. 7 is a conceptual diagram illustrating an arrangement of the first circuit 32, a second circuit 134, and the electrode portion in a pressure sensor 210 according to Third Embodiment and an equivalent circuit of the first circuit 32 and the second circuit 134. The pressure sensor 210 according to Third Embodiment is similar to the pressure sensor 10 according to First Embodiment except that a fifth resistor R15 of the second circuit 134 includes a first portion R15-1 and a second portion R15-2. The pressure sensor 210 according to Third Embodiment is explained for only differences from the pressure sensor 10 according to First Embodiment, and common matters are not explained.

As shown in FIG. 7A, the fifth resistor R15 of the second circuit 134 includes the first portion R15-1 and the second portion R15-2 arranged separately in two locations on the first circumference 24. The first portion R15-1 and the second portion R15-2 are similar to the fifth resistor R5 shown in FIG. 2 and have a structure in which three first thin film resistors R51 are connected in series by the connection portion 35 (See FIG. 2).

As shown in FIG. 7A, the first resistor R1 and the third resistor R3 of the first circuit 32 are arranged between the first portion R15-1 and the second portion R15-2 on the first circumference 24. The first portion R15-1 and the second portion R15-2 are connected electrically via second electrode portions 148 and 146.

As shown in FIG. 7A and FIG. 7B, the bridge circuit formed by the first circuit 32 of the pressure sensor 210 is similar to the first circuit 32 of the pressure sensor 10. As shown in FIG. 7C, the fifth resistor R15 included in the second circuit 134 of the pressure sensor 210 is configured by connecting the first portion R15-1 and the second portion R15-2 in series with the connection portion 35. The connection portion 35 may connect them via the substrate portion 70 shown in FIG. 1 or may directly connect them on the membrane 22. One of second electrode portions 149 and 147 shown in FIG. 7 is connected to the detection signal input unit 83 (see FIG. 3), and the other is grounded.

In the pressure sensor 210 according to Third Embodiment, since the fifth resistor R15 is disposed separately at two locations on the first circumference 24, it is possible to increase the resistance value of the fifth resistor R15 and reduce electric power consumption of the second circuit 134. Since the fifth resistor R15 is disposed on the first circumference 24 similarly to the first resistor R1 and the third resistor R3 of the first circuit 32, the pressure sensor 210 can accurately detect the pressure for switching electric power supply and the strain. The pressure sensor 210 according to Third Embodiment exhibits effects similar to those of the pressure sensor 10.

### Fourth Embodiment

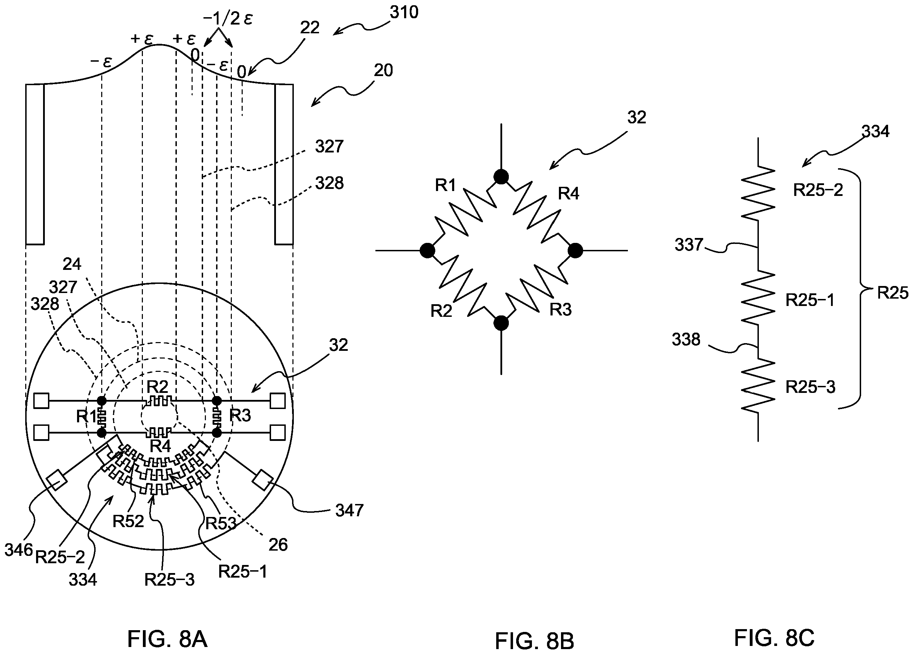

FIG. 8 is a conceptual diagram illustrating an arrangement of the first circuit 32, a second circuit 334, and the electrode portion in a pressure sensor 310 according to Fourth Embodiment and an equivalent circuit of the first circuit 32 and the second circuit 334. The pressure sensor 310 according to Fourth Embodiment is similar to the pressure sensor 10 according to First Embodiment except that a fifth resistor R25 of the second circuit 334 includes a first portion R25-1, a second portion R25-2, and a third portion R25-3. The pressure sensor 310 according to Third Embodiment is explained for only differences from the pressure sensor 10 according to First Embodiment, and common matters are not explained.

As shown in FIG. 8A, the fifth resistor R25 of the second circuit 334 is disposed separately at three locations on the first circumference 24, which is the first strain position, and on a third circumference 327 and a fourth circumference 328 as a third strain region where a strain having a different size (e.g., 1/2) on the first circumference 24 but in the same direction (e.g., compression) occurs on the membrane 22. The first portion R25-1 of the fifth resistor R25 disposed on the first circumference 24 is similar to the fifth resistor R5 shown in FIG. 2 and has a structure in which three first thin film resistors R51 are connected in series by the connection portion 35 (see FIG. 2).

As shown in FIG. 8A, the second portion R25-2 of the fifth resistor R25 disposed on the third circumference 327 has a structure in which the second thin film resistors R52 made of thin films are connected in series by connection portions. Likewise, the third portion R25-3 of the fifth resistor R25 disposed on the fourth circumference 328 has a structure in which the third thin film resistors R53 made of thin films are connected in series by connection portions.

As shown in FIG. 8A, the third circumference 327 is located on the inner circumference side of the first circumference 24, and the fourth circumference 328 is located on the outer circumference side of the first circumference 24, but both of them produce a strain in the same direction as on the first circumference 24. As shown in FIG. 8C, the second circuit 334 of the pressure sensor 310 includes a connection portion 337 for connecting the first portion R25-1 made of the first thin film resistor R51 and the second portion R25-2 made of the second thin film resistor R52 in series. Likewise, the second circuit 334 of the pressure sensor 310 includes a connection portion 338 for connecting the first portion R25-1 made of the first thin film resistor R51 and the third portion R25-3 made of the third thin film resistor R53 in series. One of the second electrode portions 346 and 347 shown in FIG. 8A is connected to the detection signal input unit 83 (see FIG. 3), and the other is grounded.

As shown in FIG. 8C, the second circuit 334 of the pressure sensor 310 includes not only the first portion R25-1 disposed on the first circumference 24, but also the second portion R25-2 and the third portion R25-3 arranged on the third circumference 327 and the fourth circumference 328, and these are connected in series by the connection portions 337 and 338 to form the fifth resistor R25. Such a second circuit 334 can effectively increase the resistance value in a limited area on the membrane 22 and is thereby advantageous from the viewpoint of low electric power consumption.

As shown in FIG. 8A and FIG. 8B, the bridge circuit formed by the first circuit 32 of the pressure sensor 310 is similar to the first circuit 32 of the pressure sensor 10. In addition, the pressure sensor 310 according to Fourth Embodiment exhibits effects similar to those of the pressure sensor 10.

### Fifth Embodiment

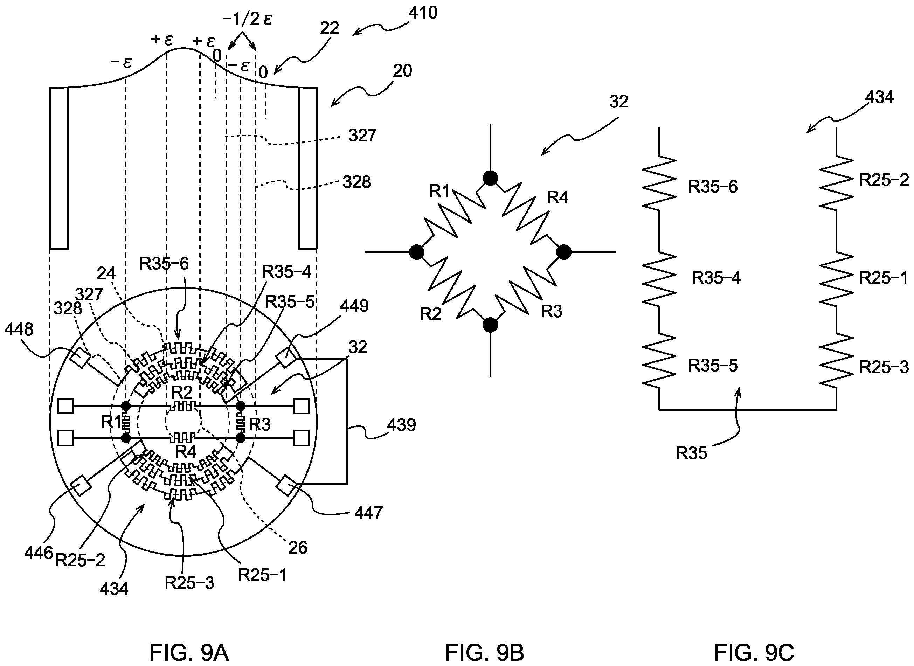

FIG. 9 is a conceptual diagram illustrating an arrangement of the first circuit 32, a second circuit 434, and the electrode portion in a pressure sensor 410 according to Fifth Embodiment and an equivalent circuit of the first circuit 32 and the second circuit 434. The pressure sensor 410 according to Fifth Embodiment is similar to the pressure sensor 310 according to Fourth Embodiment except that a fifth resistor R35 of the second circuit 434 includes a fourth portion R35-4, a fifth portion R35-5, and a sixth portion R35-6. The pressure sensor 410 according to Fifth Embodiment is explained for only differences from the pressure sensor 310 according to Third Embodiment, and common matters are not explained.

As shown in FIG. 9A, the fifth resistor R35 of the second circuit 434 includes first to third portions R25-1 to R25-3 similar to the fifth resistor R25 of the second circuit 334 shown in FIG. 8A. In addition, the fifth resistor R35 includes fourth to sixth portions R35-4 to R35-6. The fourth portion R35-4 of the fifth resistor R35 is disposed on the first circumference 24 similarly to the first portion R25-1, the fifth portion R35-5 of the fifth resistor is disposed on the third circumference 327 similarly to the second portion R25-2, and the sixth portion R35-6 of the fifth resistor R35 is disposed on the fourth circumference 328 similarly to the third portion R25-3. Except for the positions on the first to third circumferences 24, 327 and 328, the fourth to sixth portions R35-4 to R35-6 are similar to the first to third portions R25-1 to R25-3.

As shown in FIG. 9C, the first to third portions R25-1 to R25-3 and the fourth to sixth portions R35-4 to R35-6 of the fifth resistor R35 are connected in series via a connection portion 439 and the like. Such a second circuit 434 can effectively increase the resistance value in a limited area on the membrane 22 and is thereby advantageous from the viewpoint of low electric power consumption. The pressure sensor 410 according to Fifth Embodiment exhibits effects similar to those of the pressure sensor 310.

### Sixth Embodiment

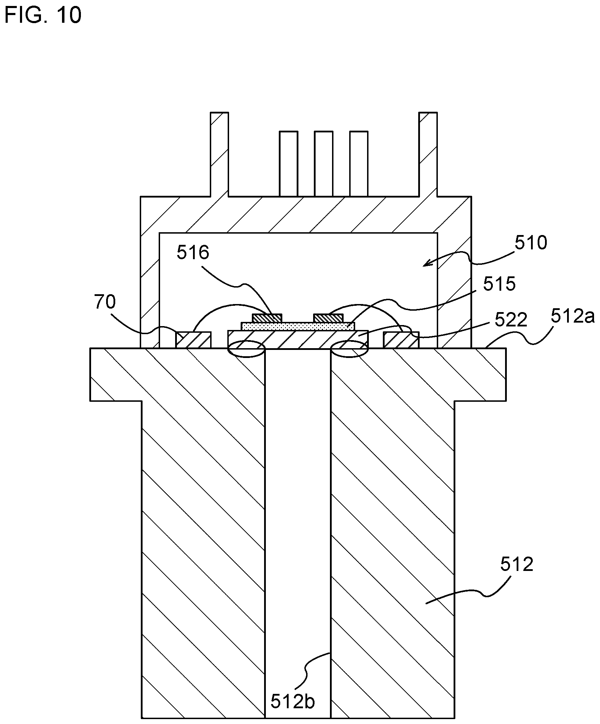

FIG. 10 is a schematic cross-sectional view of a pressure sensor 510 according to Sixth Embodiment. The pressure sensor 510 according to Sixth Embodiment is similar to the pressure sensor 510 according to Sixth Embodiment except that a membrane 522 is a flat metal plate and is not the bottom surface of the stem 20. The pressure sensor 510 according to Fifth Embodiment is explained for only differences from the pressure sensor 10 according to First Embodiment, and common matters are not explained.

The membrane 522 is fixed to an end face 512a of a housing 512 so as to close a passage 512b of the housing 512. A pressure detection circuit 516 is formed on an upper surface of the membrane 522 via an insulating film 515. The pressure detection circuit 516 includes the first circuit 32 and the second circuit 34 shown in FIG. 2. The pressure sensor 510 includes the substrate portion 70 similarly to the pressure sensor 10 shown in FIG. 1.

The flat membrane 522 is fixed to the end surface 512a of the housing 512 by welding or the like. The area of the insulating film 515 is smaller than that of the membrane 522, and the membrane 522 is partly exposed from the insulating film 515. Thus, the membrane 522 can easily be fixed to the housing 512 by contacting an electrode with the exposed membrane 522 and performing resistance welding.

The pressure sensor 510 includes the metal plate membrane 522 and is thereby advantageous for miniaturization. In addition, unlike the stem 20 (see FIG. 1), the metal plate is easily processed in a general semiconductor factory and is productive. The pressure sensor 510 according to Fifth Embodiment exhibits effects similar to those of the pressure sensor 10.

Hereinbefore, the pressure sensor according to the present invention is explained with reference to the embodiments, but the present invention is not limited to these embodiments and, needless to say, may include many other embodiments and modifications. For example, the shapes and fixation structures of the stem 20 and membranes 22 and 522 shown in FIG. 1 and FIG. 10 are merely examples, and the pressure sensor of the present invention can employ any other shapes and fixation structures in which a membrane can be deformed appropriately corresponding to pressure. The membrane of the pressure sensor is not limited to only the stem or the metal plate shown in the embodiments and can be a membrane made of other shapes and materials.

### Examples

Hereinafter, the present invention is explained in more detail with reference to examples, but the explanation of these examples does not limit the present invention in any way.

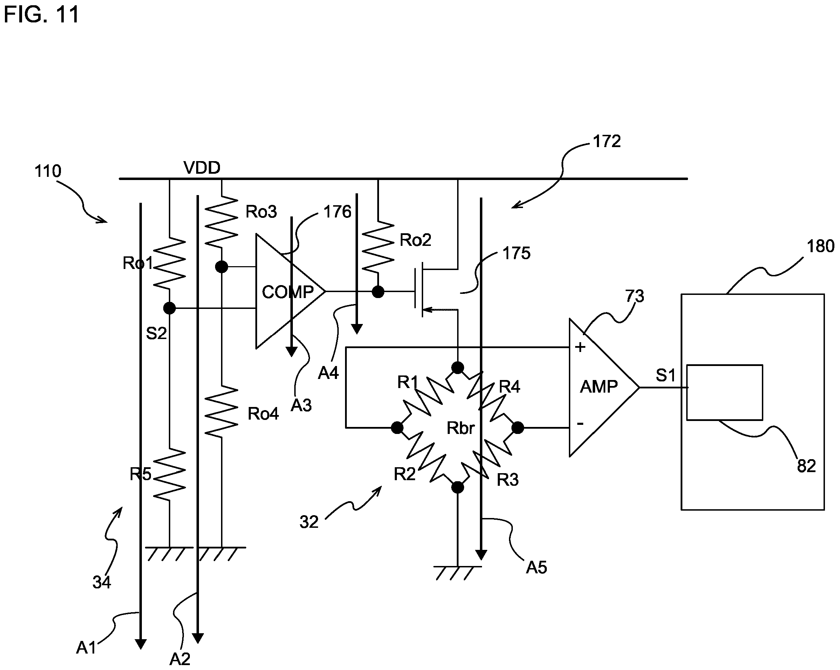

In the examples, using the pressure sensor 110 according to Second Embodiment as shown in FIG. 11, the values of electric current consumed at the sensor ON time and the sensor OFF time were calculated in each of parts A1-A5 of a circuit included in the pressure sensor 110. The resistance values used for the calculation were a resistance Rbr of the bridge circuit (a resistance of the bridge circuit by the first to fourth resistors R1-R4): 2.5 kΩ, the fifth resistor R5: 1.5 kΩ, the resistance Ro1: 20 kΩ, the resistance Ro2: 1 MΩ, the resistance Ro3: 1 MΩ, and the resistance Ro4: 250 kΩ. The power supply voltage VDD was 5V. The results are shown in Table 1.

**[Table 1]**

| | A1 | A2 | A3 | A4 | A5 | Total |
|---|---|---|---|---|---|---|
| sensor OFF time | 200 *µ*A | 4 *µ*A | 15*µ*A | 0A | 0A | 0.214mA |
| sensor ON time | 200 *µ*A | 4 *µ*A | 15 *µ*A | 5*µ*A | 2mA | 2.224mA |

It can be confirmed from Table 1 that the electric current consumption at the sensor OFF time was about 1/10 of the electric current consumption at the sensor ON time in the pressure sensor 110. Moreover, assuming a pressure sensor that does not include the second circuit 34 and is constantly energized to a bridge circuit, the electric power consumption is 2 mA (corresponding to A5 in Table 1). Comparing this with the results in Table 1 by the pressure sensor 110, it is conceivable that if the sensor OFF time exceeds about 11% of the total drive time, the pressure sensor 110 can reduce the electric current consumption as compared with the pressure sensor that does not include the second circuit 34 and is constantly energized.

### Explanation of References

10, 110, 210, 310, 410, 510... pressure sensor
12... connection member
12a... screw groove
12b, 512b... passage
14... holding member
20... stem
21... flange portion
22a... inner surface
22b... outer surface
22, 522... membrane
24... first circumference
26... second circumference
327... third circumference
328... fourth circumference
32... first circuit
34, 324, 434... second circuit
35, 337, 338... connection portion
R1... first resistor
R2... second resistor
R3... third resistor
R4... fourth resistor
R5, R25, R35... fifth resistor
R25-1... first portion
R25-2... second portion
R25-3... third portion
R35-4... fourth portion
R35-5... fifth portion
R35-6... sixth portion
R51... first thin film resistor
R52... second thin film resistor
R53... third thin film resistor
41, 42, 43, 44... first electrode portion
46, 47, 346, 347... second electrode portion
70... substrate portion
72, 172... switching unit
73... amplifier
175... transistor
176... comparator
80, 180... microprocessor
81... switch control unit
82... pressure signal input unit
83... detection signal input unit
92... connection wiring
VDD... power supply voltage
Ro1, Ro2, Ro3, Ro4... resistance
512... housing
512a... end surface
515... insulating film
516... pressure detection circuit

## Claims

1. A pressure sensor (10, 110, 210, 310, 410, 510) comprising:
a membrane (22, 522) configured to produce deformation corresponding to pressure;
a first circuit (32) including a first resistor (R1) and a third resistor (R3) arranged at a first strain position (24) where a predetermined strain characteristic occurs on the membrane (22, 522) and a second resistor (R2) and a fourth resistor (R4) arranged at a second strain position (26) where a strain characteristic in a different direction from the first strain position (24) occurs and configured to form a bridge circuit and detect strain; and
a second circuit (34, 134, 334, 434) including a fifth resistor (R5, R15, R25, R35) disposed at a position where a strain characteristic in the same direction as the first strain position (24) or the second strain position (26) in the membrane (22, 522) occurs and capable of detecting strain independently from the first circuit (32),
**characterized in that**
the pressure sensor (10, 110, 210, 310, 410, 510) further comprises a switching unit (72, 172) for switching electric power supply to the first circuit (32) using a detection signal (S2) from the second circuit (34, 134, 334, 434).

2. The pressure sensor (10, 110, 210, 310, 410, 510) according to claim 1, wherein the fifth resistor (R5, R15, R25, R35) is at least partly disposed (R15-1, R15-2, R25-1, R35-1, R35-4) at the first strain position (24) located on the outer peripheral side of the second strain position (26) on the membrane (22, 522).

3. The pressure sensor (10, 110, 210, 310, 410, 510) according to claim 1 or claim 2, wherein
the fifth resistor (R5, R15, R25, R35) includes a plurality of thin film resistors (R51, R52, R53) made of thin films, and
the second circuit (34, 134, 334, 434) includes a connection portion (35, 337, 338) for connecting the thin film resistors (R51, R52, R53) in series.

4. The pressure sensor (310, 410, 510) according to claim 1 or claim 2, wherein
the fifth resistor (R25, R35) includes a first thin film resistor (R51) made of a thin film disposed at the first strain position (24) located on the outer peripheral side of the second strain position (26) on the membrane (22, 522) and a second thin film resistor (R52) made of a thin film disposed in a third strain region (327) where a strain having a different size from the first strain position (24) but in the same direction occurs on the membrane (22, 522), the third strain region (327) being located on the inner peripheral side of the first strain position (24), and
the second circuit (334, 434) includes a connection portion (337) for connecting the first thin film resistor (R51) and the second thin film resistor (R52) in series.

5. The pressure sensor (310, 410, 510) according to claim 1 or claim 2, wherein
the fifth resistor (R25, R35) includes a first thin film resistor (R51) made of a thin film disposed at the first strain position (24) located on the outer peripheral side of the second strain position (26) on the membrane (22, 522) and a third thin film resistor (R53) made of a thin film disposed in a third strain region (328) where a strain having a different size from the first strain position (24) but in the same direction occurs on the membrane (22, 522), the third strain region (328) being located on the outer peripheral side of the first strain position (24), and
the second circuit (334, 434) includes a connection portion (338) for connecting the first thin film resistor (R51) and the third thin film resistor (R53) in series.

6. The pressure sensor (10, 110, 210, 310, 410, 510) according to any of claim 1 to claim 5, wherein a resistance value of the fifth resistor (R5, R15, R25, R35) is higher than that of any of the first to fourth resistors (R1, R2, R3, R4) in a state where the membrane (22, 522) is not deformed.

## Patentansprüche

1. Drucksensor (10, 110, 210, 310, 410, 510), aufweisend:
eine Membran (22, 522), die konfiguriert ist, eine Druck-entsprechende Verformung zu erzeugen;
eine erste Schaltung (32) mit einem ersten Widerstand (R1) und einem dritten Widerstand (R3), die an einer ersten Dehnungsposition (24) angeordnet sind, an der eine vorbestimmte Dehnungseigenschaft an der Membran (22, 522) auftritt, und einem zweiten Widerstand (R2) und einem vierten Widerstand (R4), die an einer zweiten Dehnungsposition (26) angeordnet sind, an der eine Dehnungseigenschaft in einer anderen Richtung als an der ersten Dehnungsposition (24) auftritt, und die so konfiguriert sind, dass sie eine Brückenschaltung bilden und Dehnungen detektieren; und
eine zweite Schaltung (34, 134, 334, 434) mit einem fünften Widerstand (R5, R15, R25, R35), der an einer Position angeordnet ist, an der eine Dehnungscharakteristik in derselben Richtung wie die erste Dehnungsposition (24) oder die zweite Dehnungsposition (26) in der Membran (22, 522) auftritt, und die in der Lage ist, Dehnung unabhängig von der ersten Schaltung (32) zu detektieren,
**dadurch gekennzeichnet, dass**
der Drucksensor (10, 110, 210, 310, 410, 510) weiterhin eine Schalteinheit (72, 172) zum Schalten der elektrischen Energieversorgung der ersten Schaltung (32) unter Verwendung eines Detektionssignals (S2) von der zweiten Schaltung (34, 134, 334, 434) aufweist.

2. Drucksensor (10, 110, 210, 310, 410, 510) nach Anspruch 1, wobei der fünfte Widerstand (R5, R15, R25, R35) zumindest teilweise (R15-1, R15-2, R25-1, R35-1, R35-4) an der ersten Dehnungsposition (24) angeordnet ist, die sich an der äußeren Umfangsseite der zweiten Dehnungsposition (26) auf der Membran (22, 522) befindet.

3. Drucksensor (10, 110, 210, 310, 410, 510) nach Anspruch 1 oder Anspruch 2, wobei
der fünfte Widerstand (R5, R15, R25, R35) eine Mehrzahl von Dünnschichtwiderständen (R51, R52, R53) gebildet aus dünnen Schichten aufweist, und
die zweite Schaltung (34, 134, 334, 434) einen Verbindungsabschnitt (35, 337, 338) zum Verbinden der Dünnschichtwiderstände (R51, R52, R53) in Reihe enthält.

4. Drucksensor (310, 410, 510) nach Anspruch 1 oder Anspruch 2, wobei
der fünfte Widerstand (R25, R35) einen ersten Dünnschichtwiderstand (R51) gebildet aus einer Dünnschicht angeordnet an der ersten Dehnungsposition (24), die sich auf der äußeren Umfangsseite der zweiten Dehnungsposition (26) auf der Membran (22, 522) befindet, und einen zweiten Dünnschichtwiderstand (R52) gebildet aus einer Dünnschicht angeordnet in einem dritten Dehnungsbereich (327), in dem eine Dehnung mit einer anderen Größe als die erste Dehnungsposition (24) aber in derselben Richtung auf der Membran (22, 522) auftritt, aufweist, wobei der dritte Dehnungsbereich (327) an der inneren Umfangsseite der ersten Dehnungsposition (24) angeordnet ist, und
die zweite Schaltung (334, 434) einen Verbindungsabschnitt (337) zum Verbinden des ersten Dünnschichtwiderstandes (R51) und des zweiten Dünnschichtwiderstandes (R52) in Reihe enthält.

5. Drucksensor (310, 410, 510) nach Anspruch 1 oder Anspruch 2, wobei
der fünfte Widerstand (R25, R35) einen ersten Dünnschichtwiderstand (R51), gebildet aus einer Dünnschicht an der ersten Dehnungsposition (24), die sich auf der äußeren Umfangsseite der zweiten Dehnungsposition (26) auf der Membran (22, 522) befindet, und einen dritten Dünnschichtwiderstand (R53) gebildet aus einer Dünnschicht in einem dritten Dehnungsbereich (328), in dem eine Dehnung mit einer anderen Größe als die erste Dehnungsposition (24) aber in derselben Richtung auf der Membran (22, 522) auftritt, aufweist, wobei der dritte Dehnungsbereich (328) an der äußeren Umfangsseite der ersten Dehnungsposition (24) angeordnet ist, und
die zweite Schaltung (334, 434) einen Verbindungsabschnitt (338) zum Verbinden des ersten Dünnschichtwiderstands (R51) und des dritten Dünnschichtwiderstands (R53) in Reihe enthält.

6. Drucksensor (10, 110, 210, 310, 410, 510) nach einem der Ansprüche 1 bis 5, wobei ein Widerstandswert des fünften Widerstands (R5, R15, R25, R35) höher ist als der eines der ersten bis vierten Widerstände (R1, R2, R3, R4) in einem Zustand, in dem die Membran (22, 522) nicht verformt ist.

## Revendications

1. Capteur de pression (10, 110, 210, 310, 410, 510) comprenant :
une membrane (22, 522) conçue pour produire une déformation correspondant à une pression ;
un premier circuit (32) comportant une première résistance (R1) et une troisième résistance (R3) disposées à une première position de déformation (24) où une caractéristique de déformation prédéterminée apparaît sur la membrane (22, 522) et une deuxième résistance (R2) et une quatrième résistance (R4) disposées à une deuxième position de déformation (26) où une caractéristique de déformation dans une direction différente de celle de la première position de déformation (24) apparaît et conçues pour former un circuit de pontage et détecter une déformation ; et
un deuxième circuit (34, 134, 334, 434) comportant une cinquième résistance (R5, R15, R25, R35) disposée à une position où une caractéristique de déformation dans la même direction que celle de la première position de déformation (24) ou la deuxième position de déformation (26) dans la membrane (22, 522) apparaît et pouvant détecter une déformation indépendamment du premier circuit (32), **caractérisé en ce que**
le capteur de pression (10, 110, 210, 310, 410, 510) comprend en outre une unité de commutation (72, 172) destinée à commuter l'alimentation électrique vers le premier circuit (32) en utilisant un signal de détection (S2) provenant du deuxième circuit (34, 134, 334, 434).

2. Capteur de pression (10, 110, 210, 310, 410, 510) selon la revendication 1, dans lequel la cinquième résistance (R5, R15, R25, R35) est au moins partiellement disposée (R15-1, R15-2, R25-1, R35-1, R35-4) à la première position de déformation (24) située sur le côté périphérique externe de la deuxième position de déformation (26) sur la membrane (22, 522).

3. Capteur de pression (10, 110, 210, 310, 410, 510) selon la revendication 1 ou la revendication 2, dans lequel
la cinquième résistance (R5, R15, R25, R35) comporte une pluralité de résistances en couche mince (R51, R52, R53) constituées de couches minces, et
le deuxième circuit (34, 134, 334, 434) comporte une partie branchement (35, 337, 338) destinée à brancher les résistances en couche mince (R51, R52, R53) en série.

4. Capteur de pression (310, 410, 510) selon la revendication 1 ou la revendication 2, dans lequel
la cinquième résistance (R25, R35) comporte une première résistance en couche mince (R51) constituée d'une couche mince disposée à la première position de déformation (24) située sur le côté périphérique externe de la deuxième position de déformation (26) sur la membrane (22, 522) et une deuxième résistance en couche mince (R52) constituée d'une couche mince disposée dans une troisième région de déformation (327) où une déformation ayant une taille différente de celle de la première position de déformation (24) mais dans la même direction apparaît sur la membrane (22, 522), la troisième région de déformation (327) étant située sur le côté périphérique interne de la première position de déformation (24), et
le deuxième circuit (334, 434) comporte une partie branchement (337) destinée à brancher la première résistance en couche mince (R51) et la deuxième résistance en couche mince (R52) en série.

5. Capteur de pression (310, 410, 510) selon la revendication 1 ou la revendication 2, dans lequel
la cinquième résistance (R25, R35) comporte une première résistance en couche mince (R51) constituée d'une couche mince disposée à la première position de déformation (24) située sur le côté périphérique externe de la deuxième position de déformation (26) sur la membrane (22, 522) et une troisième résistance en couche mince (R53) constituée d'une couche mince disposée dans une troisième région de déformation (328) où une déformation ayant une taille différente de celle de la première position de déformation (24) mais dans la même direction apparaît sur la membrane (22, 522), la troisième région de déformation (328) étant située sur le côté périphérique externe de la première position de déformation (24), et
le deuxième circuit (334, 434) comporte une partie branchement (338) destinée à brancher la première résistance en couche mince (R51) et la troisième résistance en couche mince (R53) en série.

6. Capteur de pression (10, 110, 210, 310, 410, 510) selon l'une quelconque des revendications 1 à 5, dans lequel une valeur de résistance de la cinquième résistance (R5, R15, R25, R35) est supérieure à celle de n'importe laquelle des première à quatrième résistances (R1, R2, R3, R4) dans un état où la membrane (22, 522) n'est pas déformée.
